# EUROPÄISCHE PATENTSCHRIFT

(11) **EP 2 064 012 B1**
(45) Veröffentlichungstag und Bekanntmachung des Hinweises auf die Patenterteilung: **24.11.2010**
(21) Anmeldenummer: 07818067.6
(22) Anmeldetag: 06.09.2007
(51) Int. Cl.: B22D 19/00, F16M 1/021, B60T 17/02

(54) **LUFTKOMPRESSOR MIT KURBELGEHÄUSE AUS ALUMINIUMGUSS**
AIR COMPRESSOR COMPRISING A CAST ALUMINUM CRANKCASE
COMPRESSEUR D'AIR À CARTER DE VILEBREQUIN EN FONTE D'ALUMINIUM

(30) Priorität: 08.09.2006 DE 102006042828; 18.05.2007 DE 102007023192
(43) Veröffentlichungstag der Anmeldung: 03.06.2009
(73) Patentinhaber: KNORR-BREMSE Systeme für Nutzfahrzeuge GmbH, 80809 München (DE)
(72) Erfinder: HEBRARD, Gilles, F-14000 Caen (FR); HERBIET, Olivier, F-14100 Lisieux (FR)
(74) Vertreter: Mattusch, Gundula
(86) Internationale Anmeldenummer: PCT/EP2007/007796
(87) Internationale Veröffentlichungsnummer: WO 2008/028669

(56) Entgegenhaltungen:
- EP-A- 0 470 021
- WO-A-2004/048765
- FR-A- 2 708 495
- JP-A- 60 101 257

## Beschreibung

### Stand der Technik

Die Erfindung betrifft einen Luftkompressor einer Druckluftanlage eines Fahrzeugs, beinhaltend eine Kolbenpumpe mit in Arbeitszylinder eines Kurbelgehäuses geführten Kolben und einer im Kurbelgehäuse geführten Kurbelwelle, wobei wenigstens ein Teil des Kurbelgehäuses aus Aluminium gegossen ist und das Kurbelgehäuse wenigstens einen Kühlmittelkanal zur Führung von Kühlmittel beinhaltet, der durch wenigstens ein, wenigstens teilweise in das Kurbelgehäuse eingegossenes Rohr gebildet wird, gemäß dem Oberbegriff von Anspruch 1.

Luftkompressoren für Nutzfahrzeuge hauben üblicherweise ein aus Stahl gegossenes Kurbelgehäuse, welches keine Kühlmittelkanäle aufweist. Die Kühlung erfolgt demgegenüber in dem auf das Kurbelgehäuse aufgesetzten Zylinderdeckel durch Luft oder Flüssigkeit abhängig von der vom Luftkompressor geforderten Leistung. In dem Zylinderdeckel sind die Einlass- und Auslassventile, deren Lagerung sowie wenigstens ein Kühlmittelkanal und gegebenenfalls ein Wärmetauscher angeordnet.

Vor dem Hintergrund eines Einbaus in ein Fahrzeug ist ein möglichst geringes Gewicht des Luftkompressors wünschenswert. Ein gattungsgemäßer Luftkompressor ist aus der EP 0 470 021 A1 bekannt, wobei das Kurbelgehäuse aus Aluminium oder aus einer Aluminiumlegierung gegossen ist und die Kühlmittelkanäle als eingegossene Aluminiumrohre ausgebildet sind.

In der WO 2004/048765 wird ein Zylinderkurbelgehäuse beschrieben, das Führungskanäle zur Kühlung aufweist, welche durch vorgeformte Rohre gebildet werden, die beim Gießen des Kurbelgehäuses mit eingegossen werden.

Die in dem Kurbelgehäuse herrschende Betriebstemperatur stellt einen wesentlichen Faktor für die Lebensdauer des Luftkompressors dar.

Der Erfindung liegt derngegenüber die Aufgabe zugrunde, einen Luftkompressor der eingangs erwähnten Art derart weiterzuentwickeln, dass er eine höhere Lebensdauer aufweist. Die erhöhte Lebensdauer soll durch eine verbesserte Kühlung erzielt, werden. Außerdem soll ein Verfahren zur Herstellung eines Luftkompressors mit diesen Eigenschaften angegeben werden.

### Offenbarung der Erfindung

Gemäß Patentanspruch 1 ist das Kurbelgehäuse aus Aluminium gegossen. Dies bringt gegenüber Kurbelgehäusen aus Stahlguss eine wesentliche Reduzierung des Gewichts mit sich. Gegenüber einem aus Stahlguss hergestellten Kurbelgehäuse ergibt sich eine Gewichteserspamis von ca. 40% bis 50%. Damit wird auch das Gewicht des den Luftkompressor tragenden Fahrzeugs in vorteilhafter Weise reduziert, was sich positiv auf den Kraftstoffverbrauch auswirkt. Weiterhin ist die spezifische Wärmeleitfähigkeit von gegossenem Aluminium ungefähr sechzig mal höher als die von gegossenem Stahl, so dass die im Betrieb entstehende Wärme besser abgeleitet werden kann, insbesondere an in wenigstens einem Kühlmittelkanal des Kurbelgehäuses geführtes Kühlmittel.

Das Kurbelgehäuse beinhaltet weiterhin wenigstens einen Kanal zur Führung von Kühlmittel. Diese Maßnahme senkt die Betriebstemperatur des Luftkompressors, so dass dieser eine höhere Lebensdauer aufweist. Dieser Kühlmittelkanal wird durch wenigstens ein, wenigstens teilweise in das Kurbelgehäuse eingegossenes Rohr gebildet.

Erfindungsgemäß ist zur Versorgung des Bereichs des Kurbelgehäuses zwischen den Arbeitszylindern mit Kühlmittel das Rohr in mehreren Windungen in Form einer Acht gebogen. Dadurch wird auch dieser Bereich, gekühlt, was sich vorteilhaft auf die Lebensdauer des Luftkompressors auswirkt. Dabei stellt das Biegen des Rohres in Form einer Acht eine einfache Maßnahme dar, um diesen Bereich mit Kühlmittel zu versorgen.

Durch die Unteransprüche sind vorteilhafte Weiterbildungen der im Patentanspruch 1. angegebenen Erfindung möglich.

Wenn der Kühlmittelkanal an einer Kontaktfläche zu einem Zylinderdeckel nach außen münden würde, um eine Fortführung des Kühlmittelkanals durch den Kühlmittelkanal im Zylinderdeckel im Rahmen eines gemeinsamen Kühlmittelkreislaufs des Kurbelgehäuses und des Zylinderdeckels zu ermöglichen, so würde dies zu Dichtigkeitsproblemen an der Kontaktfläche führen. Deshalb mündet der Kühlmittelkanal des Kurbelgehäuses bevorzugt an einer von der Kontaktfläche zum Zylinderdeckel abweichenden Fläche des Kurbelgehäuses nach außen und kann dann von außen durch eine separate Verbindung mit dem Kühlmittelkanal des Zylinderdeckels verbunden werden.

Beispielsweise wird die von der Kontaktfläche zur einem Zylinderdeckel abweichende Fläche des Kurbelgehäuses, in welche der Kühlmittelkanal mündet, durch eine Stirnfläche gebildet, welche im wesentlichen senkrecht zur Kurbelwelle angeordnet ist, wobei ein Zulauf und ein Rücklauf des Kühlmittelkanals an dieser Stirnfläche ausgebildet wird.

Gemäß einer Weiterbildung kann wenigstens ein Kühlmittelkanal des Kurbelgehäuses in einem Kühlmittelkreislauf integriert sein, welcher auch einen dem Zylinderdeckel zugeordneten Kühlmittelkanal umfasst. Die beiden Kühlmittelkanäle können in dem Kühlmittelkreislauf parallel oder in Reihe geschaltet sein.

Besonders bevorzugt wird der Kühlmittelkanal durch wenigstens ein aus einem von Aluminium abweichenden Material hergestelltes Rohr gebildet. Vorzugsweise besteht dieses Rohr aus Stahl und ist kalt- oder warmumgeformt.

Besonders bevorzugt ist das Kurbelgehäuse in einer eine Mittelachse der Kurbelwelle enthaltenden Trennebene in zwei Kurbelgehäuseteile geteilt. Dies bedingt zum einen eine einfache Montage und Fertigung des Kurbelgehäuses.

Zum andern kann dann in einer Kontaktfläche eines der Kurbelgehäuseteile ein umfangsseitig offener Ölkanal ausgebildet werden, welcher ein Kurbelwellenlager mit wenigstens einem weiteren Kurbelwellenlager zur Ölversorgung verbindet. Weiterhin kann dann der umfangsseitig offene Ölkanal durch Verbinden der beiden Kurbelgehäuseteile verschlossen werden und an dem einen Kurbelgehäuseteil stirnseitig in Anschlüsse für eine Ölversorgung münden. Somit wird zur Herstellung des Ölkanals während des Gießprozesses ein Kern verwendet, welcher nach dem Gießvorgang auf einfache Weise entfernt werden kann. Nicht zuletzt wird durch die Montage des einen Kurbelgehäuseteils am anderen Kurbelgehäuseteil dafür gesorgt, dass der Ölkanal umfangsseitig dicht verschlossen wird. Beispielsweise werden die beiden Kurbelgehäuseteile durch Zugstangen miteinander verbunden und durch Zentrierdorne gegeneinander zentriert.

Besonders bevorzugt sind sämtliche Kurbelwellenlager am Kurbelgehäuse stirnseitig ausgebildet und durch die Trennebene geteilt.

Bestenfalls ist ein oberes Kurbelgehäuseteil mit dem wenigstens einen Kühlmittelkanal sowie mit dem jeweils oberen Teil eines Kurbelwellenlagers versehen und weist wenigstens einen einen Kolben führenden Zylinder auf. Demgegenüber weist ein unteres Kurbelgehäuseteil den wenigstens einen Ölkanal sowie den jeweils unteren Teil eines Kurbelwellenlagers auf.

Das Verfahren zur Herstellung eines Luftkompressors mit einem Kurbelgehäuse, in das als Kühlmittelkanal wenigstens ein Rohr eingegossen ist, ist durch wenigstens folgende Schritte gekennzeichnet:
a) Formen wenigstens eines Rohres gemäß wenigstens eines Abschnitts des Kühlmittelkanals des Kurbelgehäuses des Luftkompressors, wobei
b) das Rohr in mehreren Windungen in Form einer Acht gebogen wird, zur Versorgung des Bereichs des Kurbelgehäuses zwischen den Arbeitszylindern durch das Rohr mit Kühlmittel,
c) Platzieren des wenigstens einen Rohres in einer Gussform für wenigstens ein Kurbelgehäuseteil des Kurbelgehäuses,
d) Gießen des wenigstens einen Kurbeigehäuseteils des Kurbelgehäuses aus Aluminium unter wenigstens teilweisem Eingießen des wenigstens einen Rohres in das wenigstens eine Kurbelgehäuseteil des Kurbelgehäuses.

Diese Vorgehensweise bringt gegenüber direkt, d.h. durch Vorsehen entsprechender Kerne in das Kurbelgehäuse eingegossenen Kühlmittelkanälen wesentliche Vorteile. Denn bei solchen müsste bei der Kühlmittelkanalführung auf eine gusstechnisch mögliche Anordnung von Gusskemen Rücksicht genommen werden, so dass die Kühlmittelkanäle nicht nach dem Kriterium einer optimalen Kühlung des Kurbelgehäuses ausgelegt werden könnten. Demgegenüber erlaubt das oben beschriebene Verfahren, das Rohr gemäß eines optimalen Kühlmittelkanalverlaufs zu formen bzw. zu biegen.

### Zeichnung

Ausführungsbeispiele der Erfindung sind in der Zeichnung dargestellt. In der Zeichnung zeigt:
- Fig.1: eine perspektivische Darstellung eines Kurbelgehäuses eines Luftkompressors gemäß einer bevorzugten Ausführungsform der Erfindung;
- Fig.2: eine perspektivische Darstellung eines aus Stahlrohr gewundenen Kühlmittelkanals für ein Kurbelgehäuse eines Luftkompressors;
- Fig.3: eine perspektivische Darstellung eines aus Stahlrohr gewundenen Kühlmittelkanals für ein Kurbelgehäuse eines Luftkompressors gemäß einer weiteren Ausführungsform;
- Fig.4: eine perspektivische Darstellung eines teilaufgeschnittenen Kurbelgehäuses mit einem integrierten Kühlmittelkanal gemäß Fig. 2;
- Fig.5: eine perspektivische Darstellung eines teilaufgeschnittenen Kurbelgehäuses von Fig. 1 mit einem integrierten Kühlmittelkanal gemäß Fig. 3;
- Fig.6: eine Querschnittsdarstellung eines Luftkompressors mit einem Kurbelgehäuse gemäß Fig.1;
- Fig.7: eine perspektivische Explosionsdarstellung des Kurbelgehäuses von Fig.1 von unten.

### Beschreibung der Ausführungsbeispiele

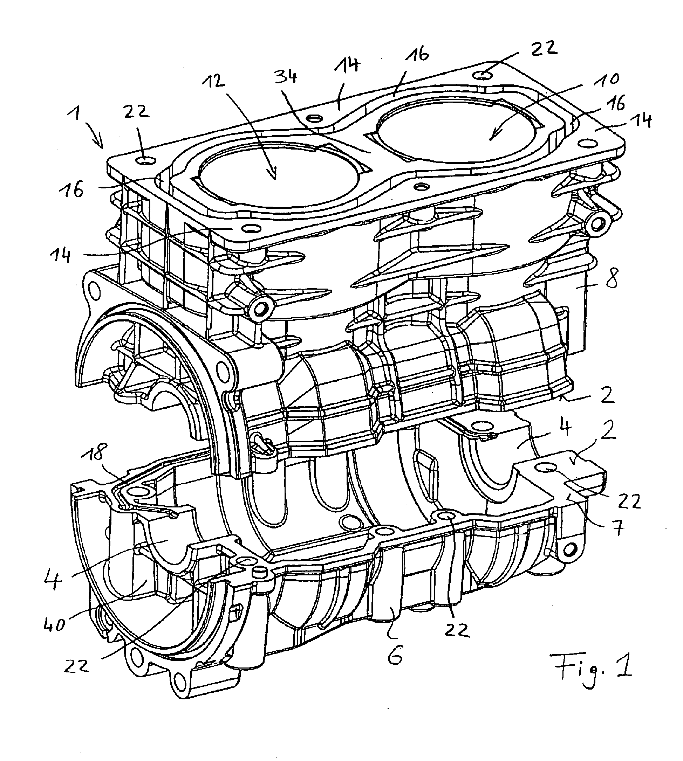

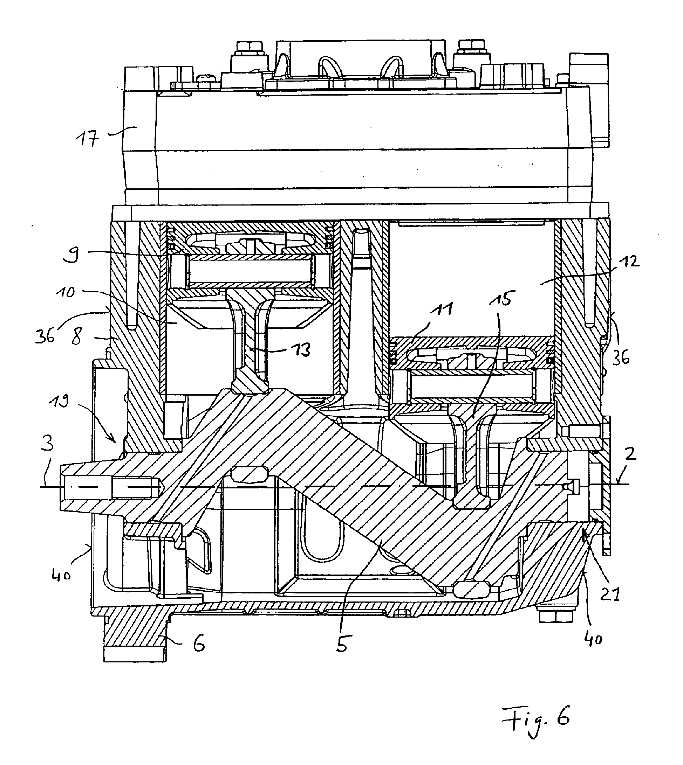

In Fig.1 ist von einem Luftkompressor gemäß eines bevorzugten Ausführungsbeispiels der Erfindung lediglich ein zweiteiliges Kurbelgehäuse 1 dargestellt. Das Kurbelgehäuse 1 ist entlang einer Trennebene 2 geteilt, welche eine Mittelachse 3 einer in Fig.6 dargestellten, durch das Kurbelgehäuse 1 in Gleittagerschalen 4 gelagerten Kurbelwelle 5 enthält sowie senkrecht zur Kolbenbewegung angeordnet ist. Das Kurbelgehäuse 1 weist ein Unterteil 6 sowie ein Oberteil 8 auf, in welchem beispielsweise zwei Arbeitszylinder 10, 12 zur Führung von zwei Kolben 9, 11 ausgebildet sind, die in bekannter Weise über Pleuelstangen 13, 15 mit der Kurbelwelle 5 zusammenwirken. In Fig.6 ist ebenfalls ein Zylinderdeckel 17 gezeigt, der auf eine plane, obere Kontaktfläche 14 des Oberteils 8 aufgesetzt wird und wenigstens Ein- und Auslassventile trägt. Weiterhin ist in dem Zylinderdeckel 17 wenigstens ein Kühlmittelkanal ausgebildet.

Besonders bevorzugt sind sämtliche Kurbelwellenlager 19, 21 an dem Kurbelgehäuse 1 ausgebildet. Im vorliegenden Fall sind zwei Kurbelwellenlager 19, 21 jeweils als stirnseitige halbkreisförmige Öffnungen im Oberteil 8 und im Unterteil 6 ausgebildet und durch die Trennebene 2 geteilt.

Gemäß einer bevorzugten Ausführungsform ist in dem Kurbelgehäuse 1 wenigstens ein Kühlmittelkanal 16 zur Führung von Kühlmittel ausgebildet, beispielsweise Luft oder ein flüssiges Kühlmittel. Der Kühlmittelkanal 16 ist vorzugsweise Bestandteil eines gemeinsamen Kühlmittelkreislaufs, welcher auch den Kühlmittelkanal des Zylinderdeckels 17 umfasst.

Gemäß der Ausführungsform von Fig.1 ist der Kühlmittelkanal 16 in der Kontaktfläche 14 des Oberteils 8 zum Zylinderdeckel 17 ausgebildet und zu dieser hin umfangsseitig offen, so dass er bei aufgesetztem Zylinderdeckel 17 umfangsseitig dicht verschlossen wird. Weiterhin ist in dem Unterteil 6 ein Ölkanal 18 ausgebildet, vorzugsweise in einer Kontaktfläche 7 zum Oberteil 8.

Das Oberteil 8 und das Unterteil 6 des Kurbelgehäuses 1 sind aus Aluminium gegossen, vorzugsweise nach einem Druckguss-, Kokillenguss- oder Sandgussverfahren. Dabei wird nach der Ausführungsform von Fig.1 der Kühlmittelkanal 16 urgeformt, d.h. im Laufe des Gussprozesses zusammen mit dem Oberteil 8 gegossen, beispielsweise, indem ein entsprechender, nach dem Gießvorgang entnommener Gusskern vorgesehen wird.

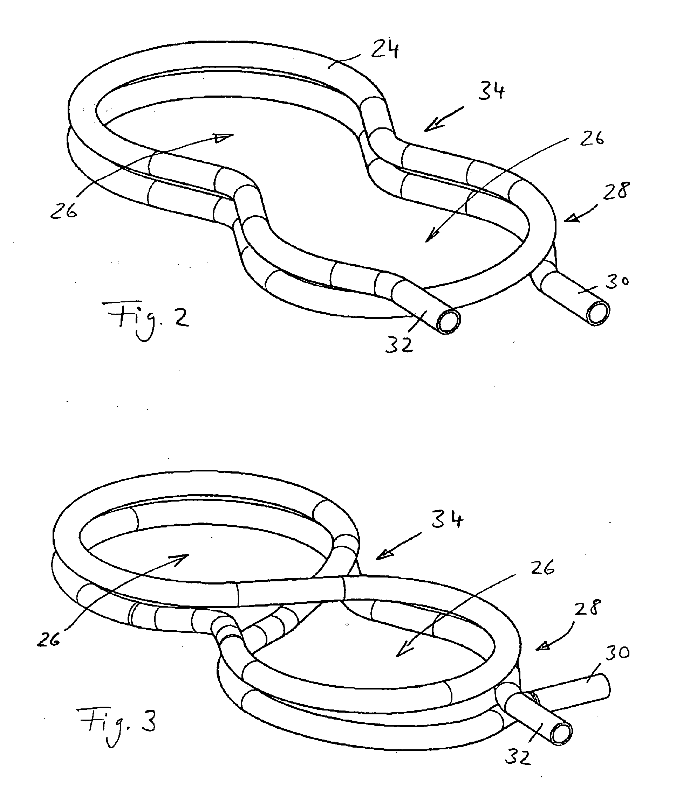

Gemäß weiteren Ausführungsformen nach Fig.2 bis Fig.5 wird der Kühlmittelkanal 16 des Kurbelgehäuses 1 vorzugsweise durch ein Rohr 24 gebildet, das aus einem von Aluminium abweichenden Material hergestellt ist und welches in das Kurbelgehäuse 1 beispielsweise im wesentlichen vollständig eingegossen ist. Das Rohr 24 besteht vorzugsweise aus wenigstens einem Stahlrohr, das gemäß dem gewünschten Verlauf des im Oberteil 8 des Kurbelgehäuses 1 angeordneten Kühlmittelkanals 16 gebogen ist.

Ein Beispiel für ein solches Rohr 24 ist in Fig.2 gezeigt, wobei das Rohr 24 vorzugsweise einstückig ausgebildet ist und zwei entsprechend dem Umfang der beiden Arbeitszylinder 10, 12 ausgeformte Bereiche 26 aufweist. Zur Verbesserung der Kühlwirkung können mehrere Rohrwindungen 28 über- oder nebeneinander angeordnet sein. Gemäß der Ausführungsform von Fig.2 hat das Rohr 24 zwei Windungen 28, wobei die beiden Endstücke 30, 32 des Rohres 24 in unmittelbarer Nachbarschaft nebeneinander angeordnet sind und einen Zulauf 30 bzw. Rücklauf 32 bilden. Bei dieser Ausführungsform ist in dem Bereich 34 zwischen den beiden Arbeitszylindern 10, 12 keine Kühlung durch einen Kühlmittelkanal vorgesehen.

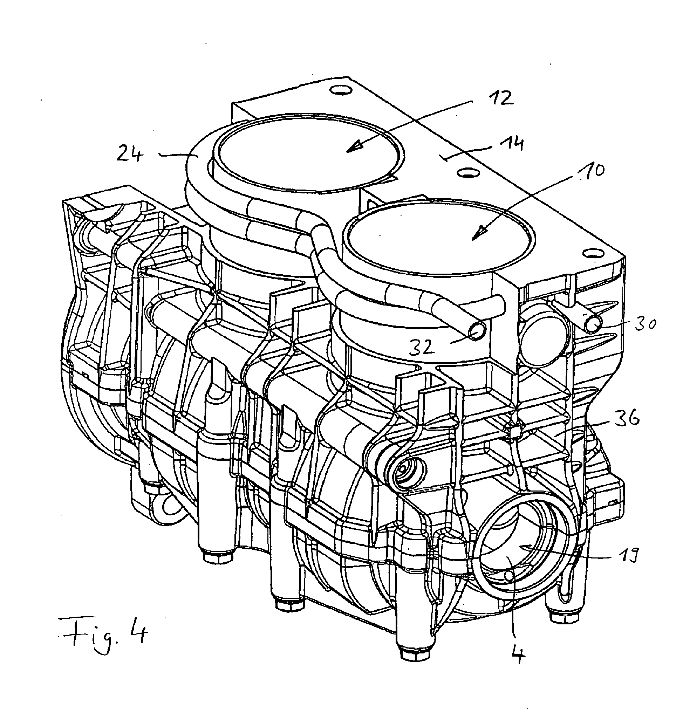

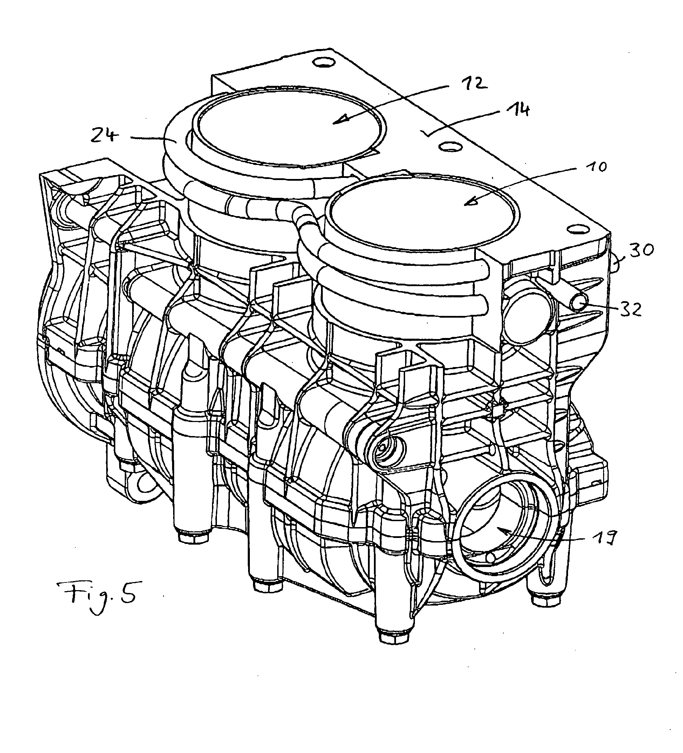

Demgegenüber ist das Rohr 24 gemäß der Ausführungsform von Fig.3 so gebogen, dass auch der Bereich 34 zwischen den Arbeitszylindern 10, 12 durch das Rohr 24 mit Kühlmittel versorgt wird. Hierzu wird das Rohr 24 ebenfalls in mehreren Windungen 28 in Form einer Acht gebogen, wobei wiederum die beiden Enden 30, 32 in die gleiche Stirnfläche 36 des Oberteils 8 des Kurbelgehäuses 1 münden bzw. aus dieser austreten, wie Fig.4 und Fig.5 zeigen. Bei der Ausführungsform von Fig.4 ist das Rohr 24 gemäß Fig.2 und bei der Ausführungsform von Fig.5 das Rohr 24 gemäß Fig.3 in das Oberteil 8 des Kurbelgehäuses 1 eingegossen.

Insbesondere mündet weder der Zulauf 30 noch der Rücklauf 32 des Rohres 24 in der oberen Kontaktfläche 14 des Oberteils 8 des Kurbelgehäuses 1 mit dem Zylinderdeckel 17, sondern an einer von dieser Fläche 14 abweichenden Fläche, vorzugsweise im oberen Bereich einer der Stirnflächen 36 des Oberteils 8 (Fig.4) oder der Rücklauf 32 dort und der Zulauf 30 an einer Seitenfläche 38 des Oberteils 8 (Fig.5) oder umgekehrt. Selbstverständlich können auch beide Enden 30, 32 in eine der Seitenflächen 38 des Oberteils 8 münden.

Wie auch aus den teilweise aufgeschnittenen Darstellungen von Fig.4 und Fig.5 hervorgeht, ist das Rohr 24 vollständig in das Oberteil 8 des Kurbelgehäuses 1 integriert, wobei lediglich seine Enden als Zulauf 30 bzw. Rücklauf 32 beispielsweise ein Stück weit aus dem Oberteil 8 herausragen, um eine Anschlussmöglichkeit an den Kühlmittelkreislauf zu liefern, welcher vorzugsweise auch den oder die Kühlmittelkanäle des Zylinderdeckels 17 umfasst.

Zur Herstellung des Kurbelgehäuses 1 wird daher zunächst dass den späteren Kühlmittelkanal 16 bildende Rohr 24 gemäß des gewünschten Kühlmittelkanalverlaufs geformt, vorzugsweise durch Kalt- oder Warmumformung eines Stahlrohrs 24. In einem weiteren Schritt wird dann das Rohr 24 in einer Gussform für das Oberteil 8 des Kurbelgehäuses 1 derart platziert, dass es in dem zu gießenden Kurbelgehäuse 1 eine Lage einnimmt, welche der Lage des zu bildenden Kühlmittelkanals 16 in Bezug zu dem Kurbelgehäuse 1 entspricht. Zuletzt wird das Oberteil 8 des Kurbelgehäuses 1 nach einem der oben genannten Verfahren gegossen, wobei das Rohr 24 in das Kurbelgehäuse 1, hier in dessen Oberteil 8 eingegossen und dadurch dort formschlüssig gehalten wird.

Schließlich wird der Zylinderdeckel 17 montiert und die Kühlmittelkanäle 16 des Kurbelgehäuses 1 und des Zylinderdeckels 17 aneinander angeschlossen, entweder in Reihen- oder in Parallelschaltung.

Gemäß eines alternativen Herstellverfahrens des Kühlmittelkanals 16 könnte dieser konventionell durch Vorsehen eines Kerns während des Gießprozesses hergestellt werden. Um eine hohe Beständigkeit des aus Aluminium gegossenen Kühlmittelkanals 16 zu gewährleisten, könnte dessen innere Umfangsfläche anschließend mit einer gegenüber aggressivem und unter hohen Temperaturen stehendem Kühlmittel durch eine demgegenüber beständige Beschichtung versehen werden, beispielsweise mit einer Nickel, Karbon, Silicon und/oder Stahl enthaltenden Beschichtung. Denkbar ist auch eine Oberflächenbehandlung der radial inneren Oberfläche des gegossenen Kühlmittelkanals 16, um dort z.B. Aluminiumnitrid auszubilden.

Wie bereits erwähnt, ist in der Kontaktfläche 7 eines der Kurbelgehäuseteile im Bereich der Trennebene 2, vorzugsweise in der Kontaktfläche 7 des Unterteils 6 zum Oberteil 8 ein umfangsseitig offener Ölkanal 18 ausgebildet, welcher ein Kurbelwellenlager 19 mit dem anderen Kurbelwellenlager 21 zur Ölversorgung verbindet. Bei der Montage des Oberteils 8 auf dem Unterteil 6 wird dann der umfangsseitig offene Ölkanal 18 dicht verschlossen. Bevorzugt mündet dieser Ölkanal 18 am Unterteil 6 stirnseitig, d.h. an einer eine Öffnung für die Kurbelwelle 5 enthaltenden Stirnfläche 40 des Unterteils 6 und bildet dort Anschlüsse 42, 43 (Vorlauf, Rücklauf) für eine Ölversorgung des Ölkanal 18 aus. Zur Herstellung des Ölkanals 18 wird während des Gießprozesses vorzugsweise ein Kern verwendet, welcher nach dem Gießvorgang aus dem Unterteil 6 wieder entfernt wird.

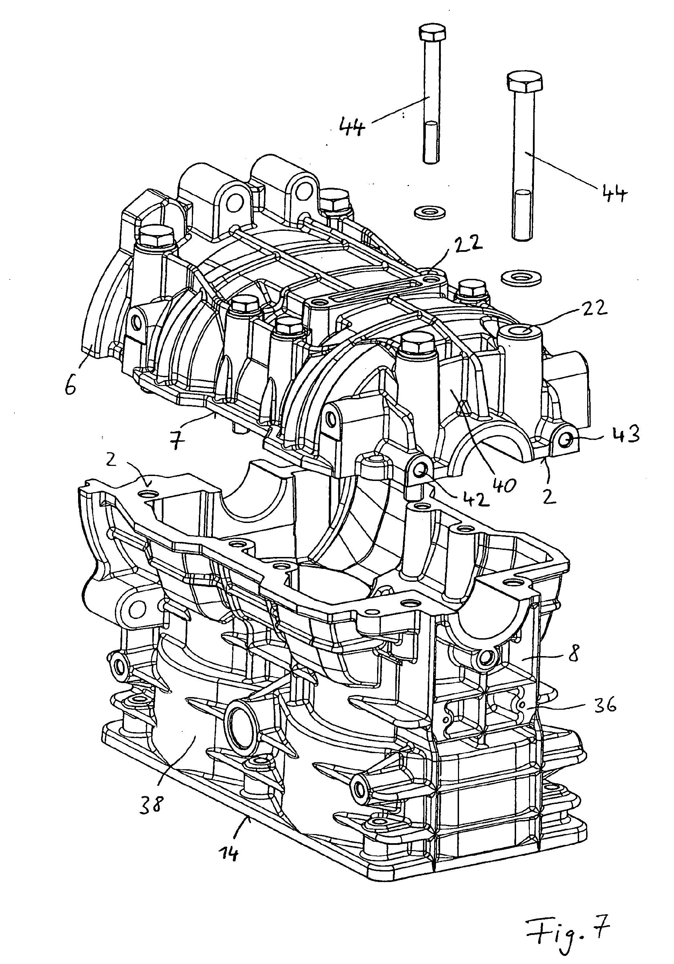

Oberteil 8 und Unterteil 6 werden beispielsweise durch Gewindezugstangen 44 miteinander verbunden, welche Durchgangsbohrungen 22 im Unterteil 6 durchragen und in Gewindebohrungen im Oberteil 8 einschraubbar sind, wie aus Fig.7 hervorgeht. Eine Zentrierung des Unterteils 6 gegenüber dem Oberteil 8 erfolgt beispielsweise durch nicht gezeigte Zentrierdorne. Eine Abdichtung zwischen dem Oberteil 8 und dem Unterteil 6 kann durch eine in der Trennebene 2 angewandte Flüssigdichtung, beispielsweise in Form von Silikon oder Cyanocrilat enthaltenden Dichtstoffen erfolgen. Nach dem Zusammenbau von Oberteil 8 und Unterteil 6 ist in der Regel noch eine spanende Bearbeitung der Kurbelwellenlager 19, 21 notwendig, in die dann die vorgefertigten Gleitlagerschalen 4 eingesetzt werden.

Demnach ist das Oberteil 8 mit dem wenigstens einen Kühlmittelkanal 16 sowie mit dem jeweils einem oberen Teil eines Kurbelwellenlagers 19, 21 versehen und weist wenigstens einen einen Kolben 9, 11 führenden Arbeitszylinder 10, 12 auf. Demgegenüber weist das Unterteil 6 den wenigstens einen Ölkanal 18 zur Ölversorgung der Kurbelwellenlager 19, 21 sowie den jeweils unteren Teil der Kurbelwellenlager 19, 21 auf.

### Bezugszeichenliste

- 1: Kurbelgehäuse
- 2: Trennebene
- 3: Mittelachse Kurbelwelle
- 4: Gleitlagerschale
- 5: Kurbelwelle
- 6: Unterteil
- 7: Kontaktfläche Unterteil
- 8: Oberteil
- 9: Kolben
- 10: Arbeitszylinder
- 11: Kolben
- 12: Arbeitszylinder
- 13: Pleuelstange
- 14: Kontaktfläche
- 16: Kühlmittelkanals
- 17: Zylinderdeckel
- 18: Ölkanal
- 19: Kurbelwellenlager
- 22: Durchgangsbohrungen
- 24: Rohr
- 26: ausgeformte Bereiche
- 28: Rohrwindungen
- 30: Endstück
- 32: Endstück
- 34: Bereich
- 36: Stirnfläche Oberteil
- 38: Seitenfläche Oberteil
- 40: Stirnfläche Unterteil
- 42: Anschluss Ölkanal
- 43: Anschluss Ölkanal
- 44: Gewindezugstangen

## Patentansprüche

1. Luftkompressor einer Druckluftanlage eines Fahrzeugs, beinhaltend eine Kolbenpumpe mit in Arbeitszylindern (10, 12) eines Kurbelgehäuses (1) geführten Kolben (9, 11) und einer im Kurbelgehäuse (1) geführten Kurbelwelle (5), wobei wenigstens ein Teil des Kurbelgehäuses (1) aus Aluminium gegossen ist und das Kurbelgehäuse (1) wenigstens einen Kühlmittelkanal (16) zur Führung von Kühlmittel beinhaltet, der durch wenigstens ein, wenigstens teilweise in das Kurbelgehäuse (1) eingegossenes Rohr (24) gebildet wird, **dadurch gekennzeichnet, dass** zur Versorgung des Bereichs (34) des Kurbelgehäuses (1) zwischen den Arbeitszylindern (10, 12) mit Kühlmittel das Rohr (24) in mehreren Windungen in Form einer Acht gebogen ist.

2. Luftkompressor nach Anspruch 1, **dadurch gekennzeichnet, dass** wenigstens ein Kühlmittelkanal (16) an einer von einer Kontaktfläche (14) zu einem Zylinderdeckel (17) abweichenden Fläche (36) des Kurbelgehäuses (1) nach außen mündet.

3. Luftkompressor nach Anspruch 2, **dadurch gekennzeichnet, dass** die von der Kontaktfläche (14) zu einem Zylinderdeckel (17) abweichende Fläche des Kurbelgehäuses (1) durch eine Stirnfläche (36) gebildet wird, welche im wesentlichen senkrecht zur Kurbelwelle (5) angeordnet ist.

4. Luftkompressor nach Anspruch 3, **dadurch gekennzeichnet, dass** ein Zulauf (30) und ein Rücklauf (32) des Kühlmittelkanals (16) an der Stirnfläche (36) ausgebildet ist.

5. Luftkompressor nach wenigstens einem der vorhergehenden Ansprüche, **dadurch gekennzeichnet, dass** wenigstens ein Kühlmittelkanal (16) des Kurbelgehäuses (1) in einem Kühlmittelkreislauf integriert ist, welcher auch einen dem Zylinderdeckel (17) zugeordneten Kühlmittelkanal umfasst.

6. Luftkompressor nach einem der vorhergehenden Ansprüche, **dadurch gekennzeichnet, dass** der Kühlmittelkanal (16) durch wenigstens ein aus einem von Aluminium abweichenden Material hergestelltes Rohr (24) gebildet wird.

7. Luftkompressor nach Anspruch 6, **dadurch gekennzeichnet, dass** das Rohr (24) wenigstens abschnittsweise aus Stahl besteht.

8. Luftkompressor nach wenigstens einem der vorhergehenden Ansprüche, **dadurch gekennzeichnet, dass** das Kurbelgehäuse (1) in einer eine Mittelachse (3) der Kurbelwelle (5) enthaltenden Trennebene (2) in zwei Kurbelgehäuseteile (6, 8) geteilt ist.

9. Luftkompressor nach Anspruch 8, **dadurch gekennzeichnet, dass** ein oberes Kurbelgehäuseteil (8) mit dem wenigstens einen Kühlmittelkanal (16) versehen ist und den wenigstens einen einen Kolben (9, 11) führenden Zylinder (10, 12) aufweist.

10. Luftkompressor nach Ansprüche oder 9, **dadurch gekennzeichnet, dass** sämtliche Kurbelwellenlager (19, 21) an dem Kurbelgehäuse (1) ausgebildet und durch die Trennebene (2) der Kurbelgehäuseteile (6, 8) geteilt sind.

11. Luftkompressor nach Anspruch 10, **dadurch gekennzeichnet, dass** die Kurbelweltenlager (19, 21) an Stirnflächen (36, 40) der Kurbelgehäuseteile (6, 8) ausgebildet sind.

12. Luftkompressor nach wenigstens einem der Ansprüche 8 bis 11, **dadurch gekennzeichnet, dass** in einer Kontaktfläche (7) eines der Kurbelgehäuseteile (6) wenigstens ein umfangsseitig offener Ölkanal (18) ausgebildet ist, welcher ein Kurbetwellenlager (19) mit wenigstens einem weiteren Kurbelwellenlager (21) zur Ölversorgung verbindet.

13. Luftkompressor nach Anspruch 12, **dadurch gekennzeichnet, dass** der offene Ölkanal (18) durch Verbinden der beiden Kurbelgehäuseteile (6, 8) umfangsseitig verschlossen ist und an dem einen Kurbelgehäuseteil (6) stirnseitig in Anschlüsse (42) für eine Ölversorgung mündet.

14. Luftkompressor nach wenigstens einem der Ansprüche 8 bis 13, **dadurch gekennzeichnet, dass** die beiden Kurbelgehäuseteile (6, 8) durch Zugstangen (44) miteinander verbunden sind.

15. Verfahren zur Herstellung eines Luftkompressors gemäß wenigstens einem der vorhergehenden Ansprüche, **gekennzeichnet durch** wenigstens folgende Schritte:
a) Formen wenigstens eines Rohres (24) gemäß wenigstens eines Abschnitts des Kühlmittelkanals (16) des Kurbelgehäuses (1) des Luftkompressors, wobei
b) das Rohr (24) in mehreren Windungen in Form einer Acht gebogen wird, zur Versorgung des Bereichs (34) des Kurbelgehäuses (1) zwischen den Arbeitszylindern (10, 12) **durch** das Rohr (24) mit Kühlmittel,
b) Platzieren des wenigstens einen Rohres (24) in einer Gussform für wenigstens ein Kurbelgehäuseteil (8) des Kurbelgehäuses (1),
c) Gießen des wenigstens einen Teils (8) des Kurbelgehäuses (1) aus Aluminium unter wenigstens teilweisem Eingießen des wenigstens einen Rohres (24) in das wenigstens eine Kurbelgehäuseteil (8) des Kurbelgehäuses (1).

16. Verfahren nach Anspruch 15, **dadurch gekennzeichnet, dass** das Kurbelgehäuse (1) nach einem Druckguss-, Kokillenguss- oder Sandgussverfahren hergestellt wird.

17. Verfahren nach Anspruch 16, **dadurch gekennzeichnet, dass** das Rohr (24) aus Stahl besteht und durch Kalt- oder Warmumformen dem gewünschten Kühlmittelkanalverlauf angepasst wird.

18. Verfahren nach Anspruch 17, **dadurch gekennzeichnet, dass** das Rohr (24) aus einem von Aluminium abweichenden Material hergestellt wird.

## Claims

1. An air compressor of a compressed air system of a vehicle, comprising a piston pump with pistons (9, 11), which are guided in working cylinders (10, 12) of a crankcase (1), and a crankshaft (5) which is guided in the crankcase (1), with at least one part of the crankcase (1) being cast from aluminum and with the crankcase (1) comprising at least one coolant duct (16) for conducting coolant, which coolant duct (16) is formed by at least one tube (24) which is at least partially integrally cast into the crankcase (1), **characterized in that**, to supply coolant to the region (34) of the crankcase (1) between the working cylinders (10, 12), the tube (24) is bent into a plurality of windings in the shape of a figure of eight.

2. The air compressor as claimed in claim 1, **characterized in that** at least one coolant duct (16) opens outward at a surface (36), which is not a contact surface (14) with respect to a cylinder cover (17), of the crankcase (1).

3. The air compressor as claimed in claim 2, **characterized in that** the surface, which is not the contact surface (14) with respect to a cylinder cover (17), of the crankcase (1) is formed by an end surface (36) which is arranged substantially perpendicular to the crankshaft (5).

4. The air compressor as claimed in claim 3, **characterized in that** a supply pipe (30) and a return pipe (32) of the coolant duct (16) is formed on the end surface (36).

5. The air compressor as claimed in at least one of the preceding claims, **characterized in that** at least one coolant duct (16) of the crankcase (1) is integrated in a coolant circuit which also comprises a coolant duct which is assigned to the cylinder cover (17).

6. The air compressor as claimed in at least one of the preceding claims, **characterized in that** the coolant duct (16) is formed by at least one tube (24) which is produced from a non-aluminum material, which tube (24) is at least partially integrally cast into the crankcase (1).

7. The air compressor as claimed in claim 6, **characterized in that** the tube (24) is composed at least partially of steel.

8. The air compressor as claimed in at least one of the preceding claims, **characterized in that** the crankcase (1) is divided into two crankcase parts (6, 8) at a parting plane (2) which encompasses a central axis (3) of the crankshaft (5).

9. The air compressor as claimed in claim 8, **characterized in that** an upper crankcase part (8) is provided with the at least one coolant duct (16) and has the at least one cylinder (10, 12) which guides a piston (9, 11).

10. The air compressor as claimed in claim 8 or 9, **characterized in that** all of the crankshaft bearings (19, 21) are formed on the crankcase (1) and are divided by the parting plane (2) of the crankcase parts (6, 8).

11. The air compressor as claimed in claim 10, **characterized in that** the crankshaft bearings (19, 21) are formed on end surfaces (36, 40) of the crankcase parts (6, 8).

12. The air compressor as claimed in at least one of claims 8 to 11, **characterized in that** at least one peripherally open oil duct (18) is formed in a contact surface (7) of one of the crankcase parts (6), which oil duct (18) connects a crankshaft bearing (19) to at least one further crankshaft bearing (21) for the supply of oil.

13. The air compressor as claimed in claim 12, **characterized in that** the open oil duct (18) is peripherally closed off by means of the connection of the two crankcase parts (6, 8) and, on the one crankcase part (6), opens out at the end side into ports (42) for a supply of oil.

14. The air compressor as claimed in at least one of claims 8 to 13, **characterized in that** the two crankcase parts (6, 8) are connected to one another by means of tension rods (44).

15. A method for producing an air compressor according to at least one of the preceding claims, **characterized by** at least the following steps:
a) shaping at least one tube (24) according to at least one section of the coolant duct (16) of the crankcase (1) of the air compressor,
b) with the tube (24) being bent into a plurality of windings in the shape of a figure of eight in order to supply coolant to the region (34) of the crankcase (1) between the working cylinders (10, 12) by means of the tube (24),
c) placing the at least one tube (24) in a casting mold for at least one crankcase part (8) of the crankcase (1),
d) casting the at least one part (8) of the crankcase (1) from aluminum such that the at least one tube (24) is at least partially integrally cast into the at least one crankcase part (8) of the crankcase (1).

16. The method as claimed in claim 15, **characterized in that** the crankcase (1) is produced using a pressure die casting, permanent mold casting or sand casting process.

17. The method as claimed in claim 16, **characterized in that** the tube (24) is composed of steel and is adapted to the desired coolant duct profile by means of cold or hot working.

18. The method as claimed in claim 17, **characterized in that** the tube (24) is produced from a non-aluminum material.

## Revendications

1. Compresseur d'air d'une installation d'air comprimé d'un véhicule, comportant une pompe à pistons ayant des pistons (9, 11) guidés dans des cylindres (10, 12) de travail d'un carter (1) de manivelle et un arbre (5) de manivelle guidé dans le carter (1) de manivelle, au moins une partie du carter (1) de manivelle étant coulé en aluminium et le carter (1) de manivelle comportant au moins un canal (16) pour conduire du fluide de refroidissement, qui est formé par au moins un tube (24) coulé, au moins en partie, dans le carter (1) de manivelle, **caractérisé en ce que**, pour l'alimentation de zone (34) du carter (1) de manivelle comprise entre les cylindres (10, 12) de travail en fluide de refroidissement, le tube (24) est courbé en plusieurs spires en forme de huit.

2. Compresseur d'air suivant la revendication 1, **caractérisé en ce qu'**au moins un canal (16) pour du fluide de refroidissement débouche vers l'extérieur sur une surface (36) du carter (1) de manivelle allant d'une surface (14) de contact à un couvercle (17) de cylindre.

3. Compresseur d'air suivant la revendication 2, **caractérisé en ce que** la surface du carter (1) de manivelle allant de la surface (14) de contact à un couvercle (17) de cylindre est formée par une surface (36) frontale, qui est disposée sensiblement perpendiculairement à l'arbre (5) de manivelle.

4. Compresseur d'air suivant la revendication 3, **caractérisé en ce qu'**un accès (30) et un retour (32) du canal (16) pour du fluide de refroidissement sont formés sur la surface (36) frontale.

5. Compresseur d'air suivant au moins l'une des revendications précédentes, **caractérisé en ce qu'**au moins un canal (16) pour du fluide de refroidissement du carter (1) de manivelle est intégré dans un circuit de fluide de refroidissement, qui comprend aussi un canal pour du fluide de refroidissement associé au couvercle (17) de cylindre.

6. Compresseur d'air suivant au moins l'une des revendications précédentes, **caractérisé en ce que** le canal (16) pour du fluide de refroidissement est formé par au moins un tube (24) en un matériau distinct de l'aluminium.

7. Compresseur d'air suivant la revendication 6, **caractérisé en ce que** le tube (24) est au moins par tronçon en acier.

8. Compresseur d'air suivant au moins l'une des revendications précédentes, **caractérisé en ce que** le carter (1) de manivelle est subdivisé en deux parties (6, 8) de carter de manivelle dans un plan (2) de séparation passant par l'axe (3) médian de l'arbre (5) de manivelle.

9. Compresseur d'air suivant la revendication 8, **caractérisé en ce qu'**une partie (8) supérieure de carter de manivelle est munie du au moins un canal (16) pour du fluide de refroidissement et a le au moins un cylindre (10, 12) guidant un piston (9, 11).

10. Compresseur d'air suivant la revendication 8 ou 9, **caractérisé en ce que** l'ensemble des paliers (19, 21) de l'arbre de manivelle conformés sur le carter (1) de manivelle sont subdivisés par le plan (2) de séparation de parties (6, 8) de carter de manivelle.

11. Compresseur d'air suivant la revendication 10, **caractérisé en ce que** les paliers (19, 21) d'arbre de manivelle sont formés sur des surfaces (36, 40) frontales des parties (6, 8) de carter de manivelle.

12. Compresseur d'air suivant au moins l'une des revendications 8 à 11, **caractérisé en ce que**, dans une surface (7) de contact de l'une des parties (6) de carter de manivelle, est formé au moins un canal (18) pour de l'huile ouvert du côté de la périphérie et mettant, pour l'alimentation en huile, un palier (19) d'arbre de manivelle en communication avec au moins un autre palier (21) d'arbre de manivelle.

13. Compresseur d'air suivant la revendication 12, **caractérisé en ce que** le canal (18) ouvert pour de l'huile est fermé du côté de la périphérie par liaison des deux parties (6, 8) de carter de manivelle et débouche, pour une alimentation en huile, dans des raccords (42) du côté frontal sur l'une des parties (6) de carter de manivelle.

14. Compresseur d'air suivant au moins l'une des revendications 8 à 13, **caractérisé en ce que** les deux parties (6, 8) de carter de manivelle sont reliées ensemble par des tirants (44).

15. Procédé de fabrication d'un compresseur d'air suivant au moins l'une des revendications précédentes, **caractérisé par** au moins les stades suivants :
a) on moule au moins un tube (24) suivant au moins un tronçon du canal (16) pour du fluide de refroidissement du carter (1) de manivelle du compresseur d'air, dans lequel
b) on courbe le tube (24) en plusieurs spires en forme d'un huit pour l'alimentation de la partie (34) du carter (1) de manivelle entre les cylindres (10, 12) de travail par le tube (24) en fluide de refroidissement,
b) on place le au moins un tube (24) dans un moule de coulée pour au moins une partie (8) de carter de manivelle du carter (1) de manivelle,
c) on coule au moins une partie (8) du carter (1) de manivelle en aluminium en incorporant, au moins en partie, le au moins un tube (24) dans la au moins une partie (8) de carter de manivelle du carter (1) de manivelle.

16. Procédé suivant la revendication 15, **caractérisé en ce que** le carter (1) de manivelle est fabriqué suivant un procédé de coulée sous pression, de coulée en coquille ou de coulée au sable.

17. Procédé suivant la revendication 16, **caractérisé en ce que** le tube (24) est en acier et est adapté par déformation à chaud ou à froid au tracé précis du canal pour du fluide de refroidissement.

18. Procédé suivant la revendication 17, **caractérisé en ce que** le tube (24) est fabriqué en un matériau distinct de l'aluminium.
